# EUROPEAN PATENT APPLICATION

(11) **EP 4 665 043 A1**
(43) Date of publication of application: **17.12.2025**
(21) Application number: 23920408.4
(22) Date of filing: 08.02.2023
(51) Int. Cl.: H04W 72/0453

(54) **METHOD AND APPARATUS FOR DETERMINING RANDOM ACCESS RESOURCE, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN); LIU, Xiaofei, Beijing 100085 (CN); QIAO, Xuemei, Beijing 100085 (CN)
(74) Representative: Stöckeler, Ferdinand
(86) International application number: PCT/CN2023/075080
(87) International publication number: WO 2024/164200

(57) **Abstract**

A method for determining random access resource. The method is executed by a first-type UE, and comprises: on the basis of first information, determining whether to use predetermined resource configuration information to perform two-step random access data transmission, wherein a bandwidth indicated by the predetermined resource configuration information exceeds a bandwidth supported by the first-type UE, the first information is used for indicating whether or not the first-type UE can use the predetermined resource configuration information to perform the two-step random access data transmission, and the bandwidth supported by first-type UE is less than a bandwidth threshold value. Compared with a case where whether predetermined resource configuration information can be used to perform two-step random access data transmission of cannot be clearly determined, wireless communication failures caused by the fact that the bandwidth configured by the predetermined resource configuration information exceeds a bandwidth supported by a first-type terminal can be reduced, thereby improving the reliability of wireless communication which is performed by the first-type UE.

## Description

### FIELD

The present disclosure relates to the field of wireless communication technologies, but is not limited thereto. In particular, the present disclosure relates to a method and a device for determining a resource for a random access, a communication device, and a storage medium.

### BACKGROUND

In wireless communication systems, a new terminal type is introduced, which is referred to as a reduced capability terminal (Reduced capability UE), or NR-lite terminal, or Redcap terminal. The Redcap terminal has the following characteristics: low cost, low complexity, a certain degree of coverage enhancement, and power saving. In the related technologies, data transmission bandwidth is limited. For Redcap terminals, how to determine a resource for a random access is an issue that needs to be considered.

### SUMMARY

The embodiments of the present disclosure provide a method and a device for determining a resource for a random access, a communication device, and a storage medium.

According to a first aspect of the embodiments of the present disclosure, a method for determining a resource for a random access is provided, the method is performed by a first-type terminal, and the method includes:
determining, based on first information, whether to use predetermined resource configuration information to perform data transmission of a 2-step random access;
where a bandwidth indicated by the predetermined resource configuration information exceeds a bandwidth supported by the first-type terminal, the first information indicates that the first-type terminal is capable or incapable of using the predetermined resource configuration information to perform the data transmission of the 2-step random access, and the bandwidth supported by the first-type terminal is less than a bandwidth threshold.

In an embodiment, the method further includes:
determining the first information based on a predetermined wireless communication protocol rule; or
determining the first information based on predetermined configuration information; or
receiving the first information transmitted by a network device.

In an embodiment, the receiving the first information transmitted by the network device includes:
receiving, via a dedicated signaling, the first information transmitted by the network device; or
receiving, via a broadcast signaling, the first information transmitted by the network device.

In an embodiment, the determining, based on the first information, whether to use the predetermined resource configuration information to perform the data transmission of the 2-step random access includes:
in a case that the first information indicates that the first-type terminal is capable of using the predetermined resource configuration information to perform the data transmission of the 2-step random access, determining to use the predetermined resource configuration information to perform the data transmission of the 2-step random access; or
in a case that the first information indicates that the first-type terminal is incapable of using the predetermined resource configuration information to perform the data transmission of the 2-step random access, determining not to use the predetermined resource configuration information to perform the data transmission of the 2-step random access.

In an embodiment, the method further includes:
in a case that the first information indicates that the first-type terminal is incapable of using the predetermined resource configuration information to perform the data transmission of the 2-step random access, setting a first random access resource set to an unavailable state, where a bandwidth of the first random access resource set exceeds the bandwidth supported by the first-type terminal.

In an embodiment, the method further includes:
in a case that the first information indicates that the first-type terminal is incapable of using the predetermined resource configuration information to perform the data transmission of the 2-step random access and an availability of a second random access resource set is determined, setting the first random access resource set to the unavailable state, where the bandwidth of the first random access resource set exceeds the bandwidth supported by the first-type terminal, and the second random access resource set includes at least one first random access resource set.

In an embodiment, the setting the first random access resource set to the unavailable state includes:
modifying an indication bit corresponding to the first random access resource set from a first value to a second value or setting an indication bit corresponding to the first random access resource set to a second value, where the first value indicates that the first random access resource set is in an available state, and the second value indicates that the first random access resource set is in the unavailable state.

In an embodiment, the setting the first random access resource set to the unavailable state includes:
upon or after determining a second random access resource set, setting the first random access resource set having the bandwidth exceeding the bandwidth supported by the first-type terminal to the unavailable state, where the second random access resource set include at least one first random access resource.

In an embodiment, in a case that the first information indicates that the first-type terminal is incapable of using the predetermined resource configuration information to perform the data transmission of the 2-step random access, the method further includes:
determining a third random access resource set, where the third random access resource set is used for the first-type terminal to perform a random access procedure, the third random access resource set does not include a first random access resource set, and a bandwidth of the first random access resource set exceeds the bandwidth supported by the first-type terminal.

In an embodiment, the predetermined resource configuration information is resource configuration information for a physical uplink shared channel (PUSCH) of a random access message A (msgA).

In an embodiment, the predetermined resource configuration information is MsgA-PUSCH-Config configured by a network and/or separateMsgA-PUSCH-Config configured by the network.

In an embodiment, the first-type terminal is of a preset type, and the preset type is a reduced capability (Redcap) terminal type.

According to a second aspect of the embodiments of the present disclosure, a method for determining a resource for a random access is provided, the method is performed by a network device, and the method includes:
transmitting first information to a first-type terminal;
where the first information indicates that the first-type terminal is capable or incapable of using predetermined resource configuration information to perform data transmission of a 2-step random access, a bandwidth of the predetermined resource configuration information exceeds a bandwidth supported by the first-type terminal, and the bandwidth supported by the first-type terminal is less than a bandwidth threshold.

In an embodiment, the transmitting the first information to the first-type terminal includes:
transmitting the first information to the first-type terminal via a dedicated signaling; or
transmitting the first information to the first-type terminals via a broadcast signaling.

According to a third aspect of the embodiments of the present disclosure, a device for determining a resource for a random access is provided, and the device includes:
a determination module, configured to: determine, based on first information, whether to use predetermined resource configuration information to perform data transmission of a 2-step random access;
where a bandwidth indicated by the predetermined resource configuration information exceeds a bandwidth supported by a first-type terminal, the first information indicates that the first-type terminal is capable or incapable of using the predetermined resource configuration information to perform the data transmission of the 2-step random access, and the bandwidth supported by the first-type terminal is less than a bandwidth threshold.

According to a fourth aspect of the embodiments of the present disclosure, a device for determining a resource for a random access is provided, and the device includes:
a transmission module, configured to transmit first information to a first-type terminal;
where the first information indicates that the first-type terminal is capable or incapable of using predetermined resource configuration information to perform data transmission of a 2-step random access, a bandwidth indicated by the predetermined resource configuration information exceeds a bandwidth supported by the first-type terminal, and the bandwidth supported by the first-type terminal is less than a bandwidth threshold.

According to a fifth aspect of the embodiments of the present disclosure, a communication device is provided, and the communication device includes:
a processor;
a memory configured to store instructions executable by the processor;
where the processor is configured to perform the method according to any embodiment of the present disclosure when executing the executable instructions.

According to a sixth aspect of the embodiments of the present disclosure, a computer storage medium having computer executable program stored thereon is provided, when the executable program is executed by a processor, the method according to any embodiment of the present disclosure is performed.

In the embodiments of the present disclosure, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. Since the first information indicates that the first-type terminal is capable or incapable of using the predetermined resource configuration information to perform the data transmission of the 2-step random access, the first-type terminal can clearly determine, based on the first information, whether to use the predetermined resource configuration information to perform the data transmission of the 2-step random access. Compared with the situation where whether the predetermined resource configuration information is to be used to perform the data transmission of the 2-step random access cannot be clearly determined, wireless communication failures caused by the fact that the bandwidth configured via the predetermined resource configuration information exceeds the bandwidth indicated by the first-type terminal can be reduced, thereby improving reliability of wireless communication for the first-type terminal.

### BRIEF DESCRIPTION OF THE DRAWINGS

FIG. 1 is a schematic structural diagram of a wireless communication system according to an exemplary embodiment;
FIG. 2 is a flow chart of a method for determining a resource for a random access according to an exemplary embodiment;
FIG. 3 is a flow chart of a method for determining a resource for a random access according to an exemplary embodiment;
FIG. 4 is a flow chart of a method for determining a resource for a random access according to an exemplary embodiment;
FIG. 5 is a flow chart of a method for determining a resource for a random access according to an exemplary embodiment;
FIG. 6 is a flow chart of a method for determining a resource for a random access according to an exemplary embodiment;
FIG. 7 is a schematic diagram of a device for determining a resource for a random access according to an exemplary embodiment;
FIG. 8 is a schematic diagram of a device for determining a resource for a random access according to an exemplary embodiment; and
FIG. 9 is a schematic structural diagram of a terminal according to an exemplary embodiment.
FIG. 10 is a block diagram of a base station according to an exemplary embodiment.

### DETAILED DESCRIPTION

Exemplary embodiments will be described in detail hereinafter, examples of which are illustrated in the drawings. When the drawings are referred to in the following description, unless otherwise indicated, same numerals in different drawings represent same or similar elements. The implementations described in the following exemplary embodiments do not represent all implementations consistent with the embodiments of the present disclosure. Rather, they are merely examples of devices and methods consistent with some aspects of the embodiments of the present disclosure and the appended claims.

The terms used in the present disclosure are for the purpose of describing particular embodiments only and are not intended to limit the present disclosure. The singular forms "a" and "the" used in the present disclosure and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present disclosure to describe various pieces of information, such information should not be limited to these terms. These terms are used only to distinguish pieces of information that are of the same type. For example, without departing from the scope of the present disclosure, first information may also be referred to as second information, and similarly, second information may also be referred to as first information. Depending on the context, for example, the expression "if" used herein may be interpreted as "in a case that" or "when" or "in response to determining".

For the purpose of brevity and ease of understanding, terms "greater than" or "less than" are used herein to characterize size relationships. However, it can be understood by those skilled in the art that the term "greater than" also covers the meaning of "greater than or equal to", and the term "less than" also covers the meaning of "less than or equal to".

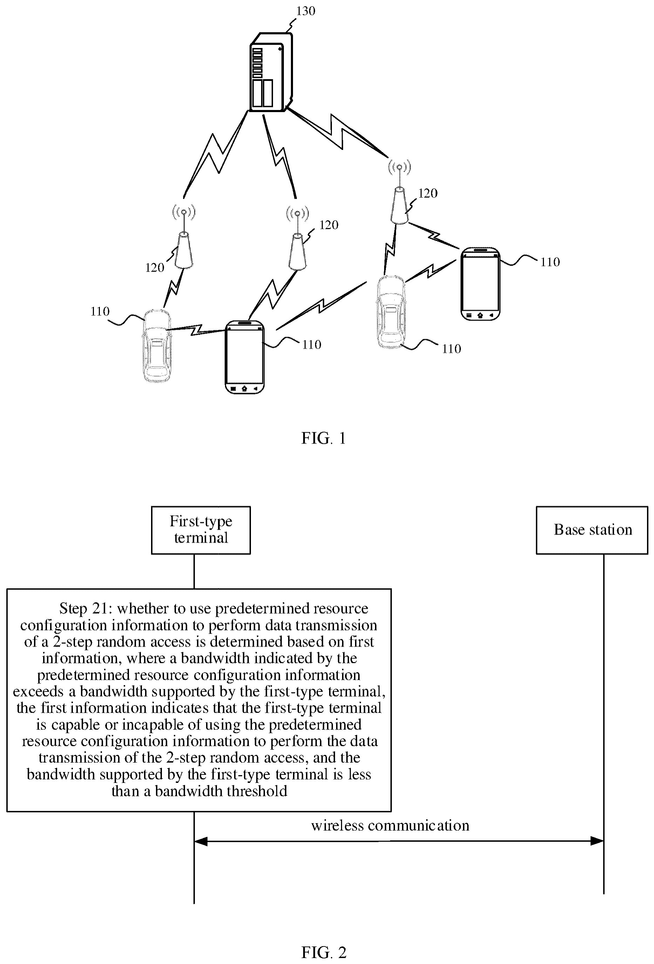

Reference is made to FIG. 1, which is a schematic diagram of a wireless communication system according to embodiments of the present disclosure. As shown in FIG. 1, the wireless communication system is a communication system based on mobile communication technology, and the wireless communication system may include several user equipments 110 and several base stations 120.

The user equipment 110 may be a device that provides voice and/or data connectivity to a user. The user equipment 110 may communicate with one or more core networks via a radio access network (RAN), and the user equipment 110 may be an Internet of Things (IoT) user equipment, such as a sensor device, a mobile phone and a computer including an IoT user equipment. For example, the user equipment 110 may be a fixed device, a portable device, a pocket device, a hand-held device, a computer built-in device or a vehicle-mounted device. For example, the user equipment 110 may be a station (STA), a subscriber unit, a subscriber station, a mobile station, a mobile, a remote station, an access point, a remote terminal, an access terminal, a user terminal, a user agent, a user device, or a user equipment. Or, the user equipment 110 may also be a device of an unmanned aerial vehicle. Or, the user equipment 110 may be a vehicle-mounted device, for example, it may be a trip computer with a wireless communication function, or a wireless communication device connected externally to the trip computer. Or, the user equipment 110 may be a roadside device, for example, it may be a street lamp, a signal lamp, or other roadside device with a wireless communication function. Or, the user equipment 11 may be a relay device, such as a wireless communication device with a relay function. The base station 120 may be a network side device in the wireless communication system. The wireless communication system may be the fourth generation mobile communication technology (the 4th generation mobile communication, 4G) system, also known as a long term evolution (long term evolution, LTE) system; or the wireless communication system may be a 5G system, also known as a new radio system or a 5G NR system. Or, the wireless communication system may be a next-generation system of the 5G system. An access network in the 5G system may be called an NG-RAN (New Generation-Radio Access Network).

The base station 120 may be an evolved node B (eNB) in a 4G system. Or, the base station 120 may be a based station (gNB) adopting a centralized and distributed architecture in the 5G system. When the base station 120 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a medium access control (MAC) layer. The distributed unit is provided with a physical (PHY) layer protocol stack. The specific implementation of the base station 120 is not limited in the embodiments of the present disclosure. In the NTN network, the access device 120 may be a base station mounted on an aerial device such as a satellite, or may be a base station on the ground that communicates with an aerial device such as a satellite via a ground station (e.g., in a transparent payload network architecture).

A radio connection may be established between the base station 120 and the user equipment 110 through a radio air interface. In different embodiments, the radio air interface is a radio air interface based on the fourth generation (4G) mobile communication network technology standard; or the radio air interface is a radio air interface based on the fifth generation (5G) mobile communication network technology standard, such as new radio; or the radio air interface is a radio air interface based on a next-generation (from 5G) mobile communication network technology standard.

In some embodiments, an end-to-end (E2E) connection is established between the user equipments 110, for example, vehicle to everything (V2X) communication, such as vehicle to vehicle (V2V) communication, vehicle to infrastructure (V2I) communication and vehicle to pedestrian (V2P) communication.

The user equipment described above may be the terminal device in the embodiments described in the following.

In some embodiments, the wireless communication system in the above may further include a network management device 130.

Several base stations 120 are connected to the network management device 130. The network management device 130 may be a core network device in the wireless communication system, for example, the network management device 130 may be a mobility management entity (MME) in an evolved packet core (EPC) network. Or, the network management device may be other core network device, such as a serving gateway (SGW), a public data network gateway (PGW), a policy and charging rules function (PCRF) unit or a home subscriber server (HSS), etc. The implementation form of the network management device 130 is not limited in the embodiments of the present disclosure.

In order to facilitate understanding for those skilled in the art, multiple implementations are provided to clearly describe the technical solutions of the embodiments of the present disclosure. Those skilled in the art can understand that the multiple implementations provided for the embodiments of the present disclosure may be executed alone or in combination with the methods of other embodiments of the present disclosure. The embodiments executed alone or in combination may further be executed together with some methods of other related technologies, which are not limited in the embodiments of the present disclosure.

In order to better understand the embodiments of the present disclosure, the relevant scenarios of paging are described herein.

In an embodiment, an early indication is needed for R17 Redcap terminals, as their schedulable time-frequency domain resources are limited. The terminal type can be identified during the random access procedure, which facilitates reasonable scheduling.

In an embodiment, the terminal-based early identification is performed based on random access channel (RACH) partition. Random access resources may be partitioned according to feature combinations (Featurecombination) that need to be supported. A portion called featureCombinationPreamblesList is allocated from random access resources RACH-ConfigCommon used for 4-step random access (4-step RACH) and random access resources RACH-ConfigCommonTwoStepRA used for 2-step random access (2-step RACH) respectively for use by specific feature combinations. It can be considered that part of random access resources is configured for use by feature combinations, while the rest are common RACH resources.

In an embodiment, during a random access procedure of a terminal, resource selection may performed preferentially in a part of featureCombinationPreamblesList to select a suitable random access resource; if the selection fails, a common RACH resource is selected.

In an embodiment, R18 terminal has been introduced, and since its uplink data transmission bandwidth is limited to 5Mhz, a frequency domain range (nrofPRBs-PerMsgA-PO) of msgA PUSCH configured in MsgA-PUSCH-Config in a random access resource configuration used by a 2-step RACH may exceed an uplink supported bandwidth of the R18 terminal, which may cause the msgA PUSCH to fail to be successfully decoded by the base station when the terminal uses the 2-step RACH. Therefore, it is needed to consider excluding such resources during random access resource selection.

In R18, eRedcap terminal has been introduced, and as compared with Redcap terminal in R17, it faces greater restrictions on schedulable time-frequency domain resources. The solutions according to the present disclosure at least facilitate a terminal in reasonably selecting a resource for a random procedure.

As shown in FIG. 2, embodiments of the present disclosure provide a method for determining a resource for a random access, the method is performed by a first-type terminal, and the method includes the following step.

Step 21: whether to use predetermined resource configuration information to perform data transmission of a 2-step random access is determined based on first information.

A bandwidth indicated by the predetermined resource configuration information exceeds a bandwidth supported by the first-type terminal, the first information indicates that the first-type terminal is capable or incapable of using the predetermined resource configuration information to perform the data transmission of the 2-step random access, and the bandwidth supported by the first-type terminal is less than a bandwidth threshold.

The terminal involved in the present disclosure may be, but is not limited to, a mobile phone, a wearable device, a vehicle-mounted terminal, a road side unit (Road Side Unit, RSU), a smart home terminal, an industrial sensor device and/or a medical device, etc. In some embodiments, the terminal may be a Redcap terminal, or a new radio (NR) terminal in a predetermined version (e.g., NR terminal in R17). In an embodiment, the first-type terminal may be an enhanced Redcap terminal in R18, and the first-type terminal is different from a second-type terminal (Redcap terminal in R17) and a third-type terminal (normal terminal, or enhanced mobile broadband (Enhanced Mobile Broadband, eMBB) terminal). Exemplarily, the transmission bandwidth of the first-type terminal may be less than or equal to 5 MHz.

The network devices involved in the present disclosure may be various types of base stations, for example, a base station in a third-generation mobile communication (3G) network, a base station in a fourth-generation mobile communication (4G) network, a base station in a fifth-generation mobile communication (5G) network, or other evolved base stations. In an embodiment, the base station may be a base station in an NTN network.

In an embodiment, the first information is determined. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information is obtained. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information is determined based on a predetermined wireless communication protocol rule. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information is determined based on predetermined configuration information. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. It should be noted that the predetermined configuration information may be preconfigured information.

In an embodiment, the first information transmitted by a network device is received. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information transmitted by the network device is received via a dedicated signaling. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In the embodiments of the present disclosure, the dedicated signaling may be a radio resource control (Radio Resource Control, RRC) signaling or a media access control (Media Access Control, MAC) control element (Control Element, CE) signaling, etc.

In an embodiment, the first information transmitted by the network device is received via a broadcast signaling. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In the embodiments of the present disclosure, the broadcast signaling may be a system message.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and a physical uplink shared channel (Physical Uplink Shared Channel, PUSCH) bandwidth supported by the first-type terminal is less than the bandwidth threshold. Exemplarily, the bandwidth threshold may be 5M. It should be noted that "less than" in the present disclosure may be understood as "less than or equal to" in some scenarios.

In an embodiment, the predetermined resource configuration information is resource configuration information for a physical uplink shared channel (PUSCH) of a random access message A (msgA). Exemplarily, the predetermined resource configuration information is MsgA-PUSCH-Config configured by a network and/or separateMsgA-PUSCH-Config configured by the network.

In an embodiment, based on the first information, whether to use msgA PUSCH resource configuration information to perform the data transmission of the 2-step random access is determined, where the bandwidth indicated by the msgA PUSCH resource configuration information exceeds the bandwidth supported by the first-type terminal, the first information indicates that the first-type terminal is capable or incapable of using the msgA PUSCH resource configuration information to perform the data transmission of 2-step random access, and the bandwidth supported by the first-type terminal is less than the bandwidth threshold. It should be noted that if the bandwidth (nrofPRBs-PerMsgA-PO) indicated by the msgA PUSCH resource configuration information is greater than the bandwidth supported by the first-type terminal, the bandwidth indicated by the msgA PUSCH resource configuration information exceeds the bandwidth supported by the first-type terminal.

In an embodiment, the first information is determined. In a case that the first information indicates that the first-type terminal is capable of using the predetermined resource configuration information to perform the data transmission of the 2-step random access, it is determined to use the predetermined resource configuration information to perform the data transmission of the 2-step random access, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information is determined. In a case that the first information indicates that the first-type terminal is incapable of using the predetermined resource configuration information to perform data transmission with 2-step random access, it is determined not to use the predetermined resource configuration information to perform the data transmission of the 2-step random access, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access, the first random access resource set is set to an unavailable state, and a bandwidth of the first random access resource set exceeds the bandwidth supported by the first-type terminal.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access, an indication bit corresponding to the first random access resource set is modified from a first value to a second value or is set to a second value, the first value indicates that the first random access resource set is in an available state, the second value indicates that the first random access resource set is in the unavailable state, and the bandwidth of the first random access resource set exceeds the bandwidth supported by the first-type terminal.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access and an availability of a second random access resource set is determined, the first random access resource set is set to the unavailable state, the bandwidth of the first random access resource set exceeds the bandwidth supported by the first-type terminal, and the second random access resource set includes at least one first random access resource set.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access and the availability of the second random access resource set is determined, the indication bit corresponding to the first random access resource set is modified from the first value to the second value or is set to the second value, the first value indicates that the first random access resource set is in the available state, the second value indicates that the first random access resource set is in the unavailable state, the bandwidth of the first random access resource set exceeds the bandwidth supported by the first-type terminal, and the second random access resource set includes at least one first random access resource set.

It should be noted that being setting to the second value may be setting a default value to the second value.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access: upon or after determining a second random access resource set, the first random access resource set having the bandwidth exceeding the bandwidth supported by the first-type terminal is set to the unavailable state, and the second random access resource set includes at least one first random access resource set.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access, the method further includes: determining a third random access resource set, where the third random access resource set is used for the first-type terminal to perform a random access procedure, the third random access resource set does not include a first random access resource set, and a bandwidth of the first random access resource set exceeds the bandwidth supported by the first-type terminal.

In an embodiment of the present disclosure, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. Since the first information indicates that the first-type terminal is capable or incapable of using the predetermined resource configuration information to perform the data transmission of the 2-step random access, the first-type terminal can clearly determine, based on the first information, whether to use the predetermined resource configuration information to perform the data transmission of the 2-step random access. Compared with the situation where whether the predetermined resource configuration information is to be used to perform the data transmission of the 2-step random access cannot be clearly determined, wireless communication failures caused by the fact that the bandwidth configured via the predetermined resource configuration information exceeds the bandwidth indicated by the first-type terminal can be reduced, thereby improving reliability of wireless communication for the first-type terminal.

It should be noted that those skilled in the art can understand that the method according to the embodiments of the present disclosure may be executed alone or together with some methods in the embodiments of the present disclosure or some methods in the related technologies.

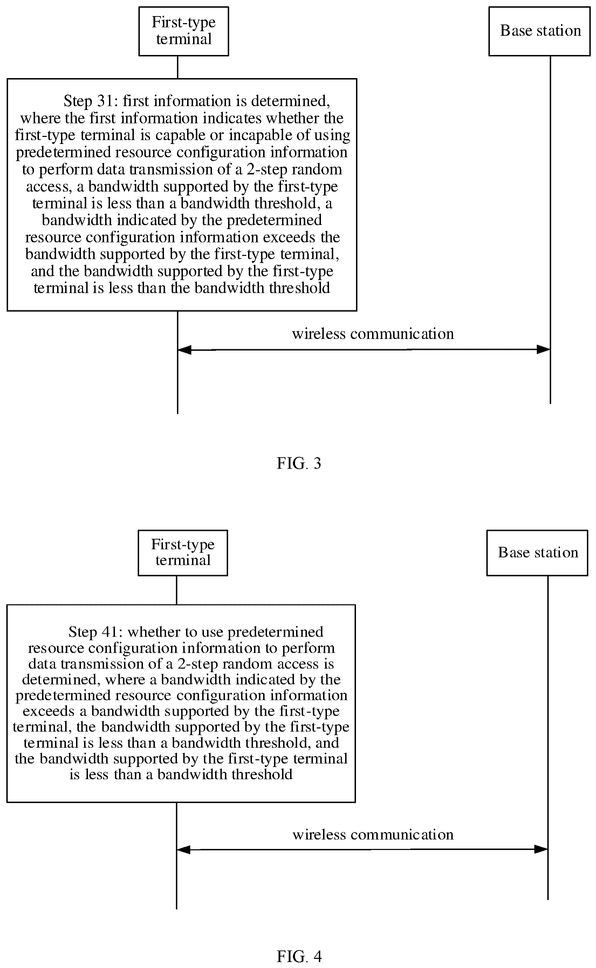

As shown in FIG. 3, embodiments of the present disclosure provide a method for determining a resource for a random access, the method is performed by a first-type terminal, and the method includes the following step.

Step 31: first information is determined.

The first information indicates whether the first-type terminal is capable or incapable of using predetermined resource configuration information to perform data transmission of a 2-step random access, a bandwidth supported by the first-type terminal is less than a bandwidth threshold, a bandwidth indicated by the predetermined resource configuration information exceeds the bandwidth supported by the first-type terminal, and the bandwidth supported by the first-type terminal is less than the bandwidth threshold.

In an embodiment, the first information is determined based on a predetermined wireless communication protocol rule. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information is determined based on predetermined configuration information. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. It should be noted that the predetermined configuration information may be preconfigured information.

In an embodiment, the first information transmitted by a network device is received. The first information is determined. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information transmitted by the network device is received via a dedicated signaling. The first information is determined. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In the embodiments of the present disclosure, the dedicated signaling may be a radio resource control (Radio Resource Control, RRC) signaling or a media access control (Media Access Control, MAC) control element (Control Element, CE) signaling, etc.

In an embodiment, the first information transmitted by the network device is received via a broadcast signaling. The first information is determined. Based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In the embodiments of the present disclosure, the broadcast signaling may be a system message.

It should be noted that those skilled in the art can understand that the method according to the embodiments of the present disclosure may be executed alone or together with some methods in the embodiments of the present disclosure or some methods in the related technologies.

As shown in FIG. 4, embodiments of the present disclosure provide a method for determining a resource for a random access, the method is performed by a first-type terminal, and the method includes the following step.

Step 41: whether to use predetermined resource configuration information to perform data transmission of a 2-step random access is determined.

A bandwidth indicated by the predetermined resource configuration information exceeds a bandwidth supported by the first-type terminal, the bandwidth supported by the first-type terminal is less than a bandwidth threshold, and the bandwidth supported by the first-type terminal is less than a bandwidth threshold.

In an embodiment, in a case that first information indicates that the first-type terminal is capable of using the predetermined resource configuration information to perform the data transmission of the 2-step random access, it is determined to use the predetermined resource configuration information to perform the data transmission of the 2-step random access, where the bandwidth indicated by the predetermined resource configuration information exceeds the bandwidth supported by the first-type terminal, the bandwidth supported by the first-type terminal is less than the bandwidth threshold, and the bandwidth supported by the first-type terminal is less than the bandwidth threshold.

In an embodiment, in a case that the first information indicates that the first-type terminal is incapable of using the predetermined resource configuration information to perform the data transmission of the 2-step random access, it is determined not to use the predetermined resource configuration information to perform the data transmission of the 2-step random access, where the bandwidth indicated by the predetermined resource configuration information exceeds the bandwidth supported by the first-type terminal, the bandwidth supported by the first-type terminal is less than the bandwidth threshold, and the bandwidth supported by the first-type terminal is less than the bandwidth threshold.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is capable of using the predetermined resource configuration information to perform the data transmission of the 2-step random access, it is determined to use the predetermined resource configuration information to perform the data transmission of the 2-step random access.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access, it is determined not to use the predetermined resource configuration information to perform the data transmission of the 2-step random access.

It should be noted that those skilled in the art can understand that the method according to the embodiments of the present disclosure may be executed alone or together with some methods in the embodiments of the present disclosure or some methods in the related technologies.

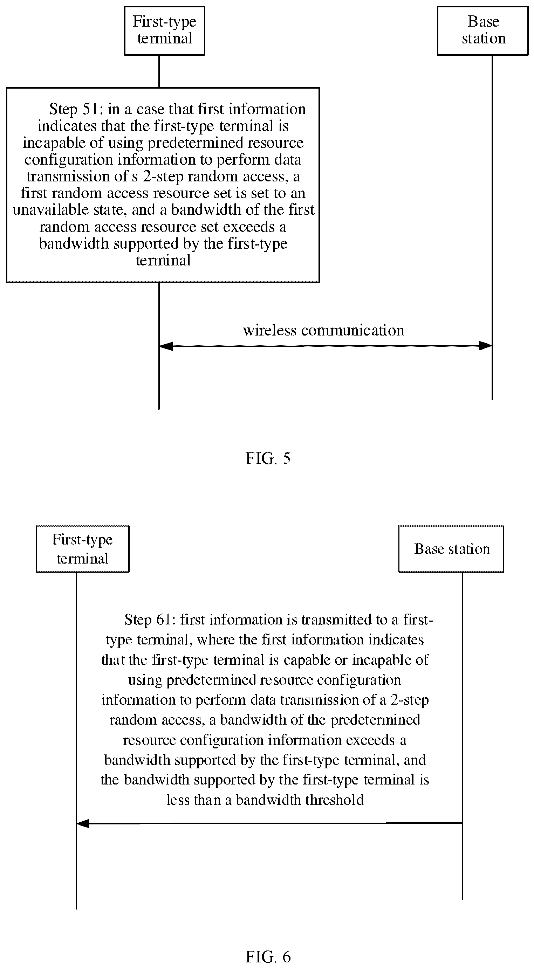

As shown in FIG. 5, embodiments of the present disclosure provide a method for determining a resource for a random access, the method is performed by a first-type terminal, and the method includes the following step.

Step 51: in a case that first information indicates that the first-type terminal is incapable of using predetermined resource configuration information to perform data transmission of s 2-step random access, a first random access resource set is set to an unavailable state, and a bandwidth of the first random access resource set exceeds a bandwidth supported by the first-type terminal.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access, the first random access resource set is set to an unavailable state, and a bandwidth of the first random access resource set exceeds the bandwidth supported by the first-type terminal.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access, an indication bit corresponding to the first random access resource set is modified from a first value to a second value or is set to a second value, the first value indicates that the first random access resource set is in an available state, the second value indicates that the first random access resource set is in the unavailable state, and the bandwidth of the first random access resource set exceeds the bandwidth supported by the first-type terminal.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access and an availability of a second random access resource set is determined, the first random access resource set is set to the unavailable state, the bandwidth of the first random access resource set exceeds the bandwidth supported by the first-type terminal, and the second random access resource set includes at least one first random access resource set.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access and the availability of the second random access resource set is determined, the indication bit corresponding to the first random access resource set is modified from the first value to the second value or is set to the second value, the first value indicates that the first random access resource set is in the available state, the second value indicates that the first random access resource set is in the unavailable state, the bandwidth of the first random access resource set exceeds the bandwidth supported by the first-type terminal, and the second random access resource set includes at least one first random access resource set.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access: upon or after determining a second random access resource set, the first random access resource set having the bandwidth exceeding the bandwidth supported by the first-type terminal is set to the unavailable state, and the second random access resource set includes at least one first random access resource set.

In an embodiment, based on the first information, whether to use the predetermined resource configuration information to perform the data transmission of the 2-step random access is determined, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In a case that the first information indicates that the first-type terminal is incapable of using the predetermined resource configuration information to perform the data transmission of the 2-step random access, the method further includes: determining a third random access resource set, where the third random access resource set is used for the first-type terminal to perform a random access procedure, the third random access resource set does not include a first random access resource set, and a bandwidth of the first random access resource set exceeds the bandwidth supported by the first-type terminal.

It should be noted that those skilled in the art can understand that the method according to the embodiments of the present disclosure may be executed alone or together with some methods in the embodiments of the present disclosure or some methods in the related technologies.

As shown in FIG.6, embodiments of the present disclosure provide a method for determining a resource for a random access, the method is performed by a network device, and the method includes the following step.

Step 61: first information is transmitted to a first-type terminal.

The first information indicates that the first-type terminal is capable or incapable of using predetermined resource configuration information to perform data transmission of a 2-step random access, a bandwidth of the predetermined resource configuration information exceeds a bandwidth supported by the first-type terminal, and the bandwidth supported by the first-type terminal is less than a bandwidth threshold.

The terminal involved in the present disclosure may be, but is not limited to, a mobile phone, a wearable device, a vehicle-mounted terminal, a road side unit (Road Side Unit, RSU), a smart home terminal, an industrial sensor device and/or a medical device, etc. In some embodiments, the terminal may be a Redcap terminal, or a new radio (NR) terminal in a predetermined version (e.g., NR terminal in R17). In an embodiment, the first-type terminal may be an enhanced Redcap terminal in R18, and the first-type terminal is different from a second-type terminal (Redcap terminal in R17) and a third-type terminal (normal terminal, or enhanced mobile broadband (Enhanced Mobile Broadband, eMBB) terminal). Exemplarily, the transmission bandwidth of the first-type terminal may be less than or equal to 5 MHz.

The network devices involved in the present disclosure may be various types of base stations, for example, a base station in a third-generation mobile communication (3G) network, a base station in a fourth-generation mobile communication (4G) network, a base station in a fifth-generation mobile communication (5G) network, or other evolved base stations. In an embodiment, the base station may be a base station in an NTN network.

In an embodiment, the first information is transmitted to the first-type terminal. Based on the first information, whether to use the predetermined resource configuration information to perform the data transmission of the 2-step random access is determined by the first-type terminal, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold.

In an embodiment, the first information is transmitted to the first-type terminal via a dedicated signaling. Based on the first information, whether to use the predetermined resource configuration information to perform the data transmission of the 2-step random access is determined by the first-type terminal, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In the embodiments of the present disclosure, the dedicated signaling may be a radio resource control (Radio Resource Control, RRC) signaling or a media access control (Media Access Control, MAC) control element (Control Element, CE) signaling, etc.

In an embodiment, the first information is transmitted to the first-type terminal via a broadcast signaling. Based on the first information, whether to use the predetermined resource configuration information to perform the data transmission of the 2-step random access is determined by the first-type terminal, where the bandwidth indicated by the predetermined resource configuration information exceeds the bandwidth supported by the first-type terminal, the first information indicates that the first-type terminal is capable or incapable of using the predetermined resource configuration information to perform the data transmission of the 2-step random access, and the bandwidth supported by the first-type terminal is less than the bandwidth threshold. In the embodiments of the present disclosure, the broadcast signaling may be a system message.

In an embodiment, the first information is transmitted to the first-type terminal, the first information indicates that the first-type terminal is capable or incapable of using predetermined resource configuration information to perform the data transmission of the 2-step random access, the bandwidth of the predetermined resource configuration information exceeds the bandwidth supported by the first-type terminal, and the bandwidth supported by the first-type terminal is less than the bandwidth threshold; the predetermined resource configuration information is resource configuration information for a physical uplink shared channel (PUSCH) of a random access message A (msgA). Exemplarily, the predetermined resource configuration information is MsgA-PUSCH-Config configured by a network and/or separateMsgA-PUSCH-Config configured by the network.

It should be noted that those skilled in the art can understand that the method according to the embodiments of the present disclosure may be executed alone or together with some methods in the embodiments of the present disclosure or some methods in the related technologies.

In order to better understand the embodiments of the present disclosure, the technical solutions of the present disclosure is further described hereinafter with reference to four exemplary embodiments.

### Example 1:

The present disclosure provides a method for selecting a resource for a random access procedure for a specific type of terminal (corresponding to the first-type terminal in the present disclosure).

In an embodiment, the first-type terminal is an enhanced eRedcap terminal in R18, and the first-type terminal is different from a second-type terminal (R17 Redcap terminal) or a third-type terminal (normal terminal, or eMBB terminal).

In an embodiment, the transmission of uplink data (PUSCH data) by the first-type terminal may not exceed a threshold bandwidth, such as a 5M bandwidth.

In an embodiment, for the first-type terminal, the network (corresponding to the manner in which the first information is transmitted by the base station in the present disclosure) or the protocol (corresponding to the manner in which the first information is determined based on the predetermined protocol rule in the present disclosure) stipulates whether to use the msgA PUSCH resource configuration (corresponding to the predetermined resource configuration information in the present disclosure) that exceeds the terminal capability to perform the transmission of the 2-step RACH.

In an embodiment, if the bandwidth range (nrofPRBs-PerMsgA-PO) in the msgA PUSCH resource configuration is greater than the bandwidth supported by the terminal, it is considered to exceed the terminal capability range.

In an embodiment, the protocol stipulates that the first-type terminal is incapable of using the msgA PUSCH resource configuration exceeding its supported bandwidth to perform the transmission of the 2-step RACH.

In an embodiment, the protocol stipulates that the first-type terminal is capable of using the msgA PUSCH resource configuration exceeding its supported bandwidth to perform the transmission of the 2-step RACH.

In an embodiment, the network indicates that the first-type terminal is capable or incapable of using the msgA PUSCH resource configuration exceeding its supported bandwidth to perform the transmission of the 2-step RACH. It should be noted that if the network supports it to perform the transmission of the 2-step RACH by using the msgA PUSCH resource configuration exceeding its supported bandwidth capability, there is a risk of msgA PUSCH decoding failure. However, it may proceed in this manner if the base station deems this acceptable.

In an embodiment, the network notifies the first-type terminal via a dedicated signaling or a broadcast information whether the first-type terminal is capable of using the msgA PUSCH resource configuration exceeding its supported bandwidth to perform the transmission of the 2-step RACH.

In an embodiment, the msgA PUSCH resource configuration is MsgA-PUSCH-Config configured by the network and/or separateMsgA-PUSCH-Config configured by the network, that is, it includes both the MsgA-PUSCH resource configuration of common RACH and the resource configuration of RACH partition.

In an embodiment, in a case that the protocol stipulates that the first-type terminal is incapable of using the msgA PUSCH resource configuration exceeding its supported bandwidth to perform the transmission of the 2-step RACH, when availability of random access (Random Access, RA) resource sets is determined, RA resource sets exceeding the terminal capability range need to be set as unavailable.

In an embodiment, when the terminal determines availability of RA resources set of 4-step RACH and 2-Step RACH: after the RA resource sets are selected in a predetermined manner (reference is made to the embodiments for describing the relevant scenario of paging in the above) or after selection is performed in a predetermined manner for RA resource sets of RACH partition and RA resource sets including common Rach, elimination is further performed according to the terminal capability, to eliminate available RA resource sets outside the terminal capability range.

In an embodiment, elimination may be performed first according to the terminal capability, and then selection is performed in a conventional manner for RA resource sets of RACH partition and RA resource sets including common Rach.

### Example 2:

This example illustrates how to determine the availability of a resource for a random access set.

For each group of configured random access resources (or resource set, the same below) of 4-step RA type and for each group of configured random access resources (resource set) of 2-step RA type, the MAC entity needs to do the following steps.

If a RedCap indication is configured for a group of random access resources (resource set),
the group of random access resources (resource set) is regarded as unavailable for a random access procedure for which the RedCap indication indicates not applicable.

If an SDT indication is configured for a group of random access resources (resource set),
the group of random access resource (resource set) is regarded as unavailable for a random access procedure not triggered by small data transmission (SDT).

If an NSAG indication is configured for a group of random access resources (resource set),
the group of random access resources (resource set) is regarded as unavailable for a random access procedure unless this group of random access resources is triggered for the corresponding NSAG indication.

If a MSG3 repeat indication is configured for a group of random access resources (resource set),
in a case that MSG3 repetition is not applicable, this group of random access resources (resource set) is regarded as unavailable for a random access procedure.

If a group of random access resources (resource set) is not configured with any RedCap or SDT or NSAG or MSG3 repeat indication,
the group of random access resources (resource set) is regarded as not to be associated with any feature indication.

After the above steps, for a specific type of terminal (such as eRedcap UE in R18), the following determination needs to be performed:
with respect to R18 eRedcap, for a group of random access resources (resource set), if PUSCH allocation for two-step RACH access exceeds the bandwidth supported by R18e Redcap, this group of random access resources (resource set) is regarded as unavailable for a random access procedure.

### Example 3:

That is, in Example 2, during the random access resource selection process after determining the availability of the random access resource sets according to the conventional process, random access resource sets within the support range of the terminal capability may be further eliminated first according to the terminal capability.

That is, with respect to R18 eRedcap, for a group of random access resources (resource set), if the PUSCH allocation for two-step RACH access exceeds the bandwidth supported by R18 eRedcap, this group of random access resources (resource set) is regarded as unavailable for a random access procedure.

For a terminal, whether R18 eRedcap is applicable to this example depends on the high-layer indication during random access.

### Example 4:

In an embodiment, when the terminal determines whether to use 4-step RACH and 2-Step RACH, the terminal capability needs to be considered for the selection of 2-step RACH.

In an embodiment, within the selected random access resource set, if the BWP selected for the random access procedure is configured with random access resources of 2-step and 4-step RA type (such as specified in TS 38.321 clause 5.1.1b), and the RSRP of the downlink path loss reference is higher than the msgA-RSRP-Threshold and the UE capability supports the selected 2-step random access resource set (such as the msgA PUSCH bandwidth in the resource set is within the support range of the terminal capability), or, within the selected random access resource set, if the BWP selected for the random access procedure is only configured with random access resource sets of 2-step RA type, and the UE capability supports the selected 2-step random access resource set (such as the msgA PUSCH bandwidth in the resource set is within the support range of the terminal capability), RA_TYPE is set to 2-stepRA. Otherwise, RA_TYPE is set to 4-stepRA.

It should be noted that those skilled in the art can understand that the method according to the embodiments of the present disclosure may be executed alone or together with some methods in the embodiments of the present disclosure or some methods in the related technologies.

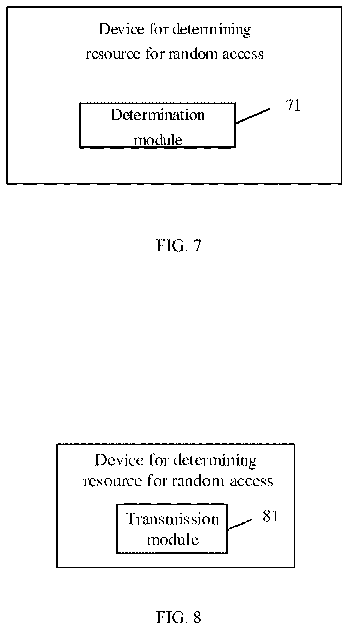

As shown in FIG. 7, embodiments of the present disclosure provide a device for determining a resource for a random access, and the device includes a determination module 71.

The determination module 71 is configured to: determine, based on first information, whether to use predetermined resource configuration information to perform data transmission of a 2-step random access.

A bandwidth indicated by the predetermined resource configuration information exceeds a bandwidth supported by a first-type terminal, the first information indicates that the first-type terminal is capable or incapable of using the predetermined resource configuration information to perform the data transmission of the 2-step random access, and the bandwidth supported by the first-type terminal is less than a bandwidth threshold.

It should be noted that those skilled in the art can understand that the method according to the embodiments of the present disclosure may be executed alone or together with some methods in the embodiments of the present disclosure or some methods in the related technologies.

As shown in FIG. 8, embodiments of the present disclosure provide a device for determining a resource for a random access, and the device includes a transmission module 81.

The transmission module 81 is configured to transmit first information to a first-type terminal.

The first information indicates that the first-type terminal is capable or incapable of using predetermined resource configuration information to perform data transmission of a 2-step random access, a bandwidth indicated by the predetermined resource configuration information exceeds a bandwidth supported by the first-type terminal, and the bandwidth supported by the first-type terminal is less than a bandwidth threshold.

It should be noted that those skilled in the art can understand that the method according to the embodiments of the present disclosure may be executed alone or together with some methods in the embodiments of the present disclosure or some methods in the related technologies.

The embodiments of the present disclosure provide a communication device, including:
a processor; and
a memory configured to store storing processor executable instructions.

The processor is configured to perform the method according to any embodiment of the present disclosure when executing the executable instructions.

The processor may include any type of storage medium, and the storage medium is a non-transitory computer storage media configured to retain information stored thereon after power loss to the user equipment.

The processor may be connected to the memory via a bus or the like, and may be configured to read the executable program stored in the memory.

Embodiments of the present disclosure further provide a computer storage medium, which stores a computer executable program. When the executable program is executed by a processor, the method according to any embodiment of the present disclosure is performed.

Regarding the device in the above embodiments, the specific manner in which each module performs operations is described in detail in the embodiments of the method, which will not be further described herein.

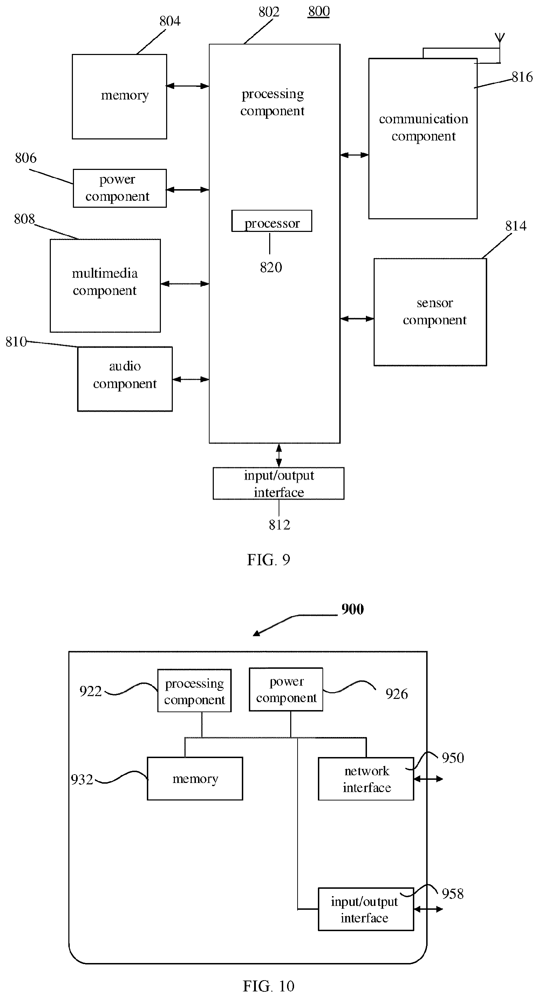

As shown in FIG. 9, an embodiment of the present disclosure provides a terminal.

As shown in FIG. 9, the terminal 800 of the present disclosure may be a mobile phone, a computer, a digital broadcast terminal, a messaging device, a game console, a tablet device, a medical device, a fitness device, a personal digital assistant, or the like.

Referring to FIG. 9, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the terminal 800 may be implemented with one or more of an application specific integrated circuits (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 804, executable by the processor 820 in the terminal 800, for completing the above-mentioned method. For example, the non-transitory computer-readable storage medium may be a ROM, a random access memory (RAM), a CD-ROM, a magnetic tape, a floppy disc, an optical data storage device, and the like.

As shown in FIG. 10, embodiments of the present disclosure provide a structure of a base station. For example, the base station 900 may be provided as a network side device. Referring to FIG. 9, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any method applied to the base station as described above.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server ^{™}, Mac OS ^{XTM}, Unix^{™} Linux^{™} FreeBSD^{™}, or the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the scope of the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the scope of the appended claims.

## Claims

1. A method for determining a resource for a random access, performed by a first-type terminal, comprising:
determining, based on first information, whether to use predetermined resource configuration information to perform data transmission of a 2-step random access;
wherein a bandwidth indicated by the predetermined resource configuration information exceeds a bandwidth supported by the first-type terminal, the first information indicates that the first-type terminal is capable or incapable of using the predetermined resource configuration information to perform the data transmission of the 2-step random access, and the bandwidth supported by the first-type terminal is less than a bandwidth threshold.

2. The method according to claim 1, further comprising:
determining the first information based on a predetermined wireless communication protocol rule; or
determining the first information based on predetermined configuration information; or
receiving the first information transmitted by a network device.

3. The method according to claim 2, wherein receiving the first information transmitted by the network device comprises:
receiving, via a dedicated signaling, the first information transmitted by the network device; or
receiving, via a broadcast signaling, the first information transmitted by the network device.

4. The method according to any one of claims 1 to 3, wherein determining, based on the first information, whether to use the predetermined resource configuration information to perform the data transmission of the 2-step random access comprises:
in a case that the first information indicates that the first-type terminal is capable of using the predetermined resource configuration information to perform the data transmission of the 2-step random access, determining to use the predetermined resource configuration information to perform the data transmission of the 2-step random access; or
in a case that the first information indicates that the first-type terminal is incapable of using the predetermined resource configuration information to perform the data transmission of the 2-step random access, determining not to use the predetermined resource configuration information to perform the data transmission of the 2-step random access.

5. The method according to any one of claims 1 to 4, further comprising:
in a case that the first information indicates that the first-type terminal is incapable of using the predetermined resource configuration information to perform the data transmission of the 2-step random access, setting a first random access resource set to an unavailable state, wherein a bandwidth of the first random access resource set exceeds the bandwidth supported by the first-type terminal.

6. The method according to claim 5, further comprising:
in a case that the first information indicates that the first-type terminal is incapable of using the predetermined resource configuration information to perform the data transmission of the 2-step random access and an availability of a second random access resource set is determined, setting the first random access resource set to the unavailable state, wherein the bandwidth of the first random access resource set exceeds the bandwidth supported by the first-type terminal, and the second random access resource set comprises at least one first random access resource set.

7. The method according to claim 5 or claim 6, wherein setting the first random access resource set to the unavailable state comprises:
modifying an indication bit corresponding to the first random access resource set from a first value to a second value or setting an indication bit corresponding to the first random access resource set to a second value, wherein the first value indicates that the first random access resource set is in an available state, and the second value indicates that the first random access resource set is in the unavailable state.

8. The method according to claim 5 or claim 6, wherein setting the first random access resource set to the unavailable state comprises:
upon or after determining a second random access resource set, setting the first random access resource set having the bandwidth exceeding the bandwidth supported by the first-type terminal to the unavailable state, wherein the second random access resource set comprise at least one first random access resource set.

9. The method according to claim 1, wherein in a case that the first information indicates that the first-type terminal is incapable of using the predetermined resource configuration information to perform the data transmission of the 2-step random access, the method further comprises:
determining a third random access resource set, wherein the third random access resource set is used for the first-type terminal to perform a random access procedure, the third random access resource set does not comprise a first random access resource set, and a bandwidth of the first random access resource set exceeds the bandwidth supported by the first-type terminal.

10. The method according to claim 1, wherein the predetermined resource configuration information is resource configuration information for a physical uplink shared channel (PUSCH) of a random access message A (msgA).

11. The method according to claim 10, wherein the predetermined resource configuration information is MsgA-PUSCH-Config configured by a network and/or separateMsgA-PUSCH-Config configured by the network.

12. The method according to any one of claims 1 to 11, wherein the first-type terminal is of a preset type, and the preset type is a reduced capability (Redcap) terminal type.

13. A method for determining a resource for a random access, performed by a network device, comprising:
transmitting first information to a first-type terminal;
wherein the first information indicates that the first-type terminal is capable or incapable of using predetermined resource configuration information to perform data transmission of a 2-step random access, a bandwidth of the predetermined resource configuration information exceeds a bandwidth supported by the first-type terminal, and the bandwidth supported by the first-type terminal is less than a bandwidth threshold.

14. The method according to claim 13, wherein transmitting the first information to the first-type terminal comprises:
transmitting the first information to the first-type terminal via a dedicated signaling; or
transmitting the first information to the first-type terminals via a broadcast signaling.

15. A device for determining a resource for a random access, comprising:
a determination module, configured to: determine, based on first information, whether to use predetermined resource configuration information to perform data transmission of a 2-step random access;
wherein a bandwidth indicated by the predetermined resource configuration information exceeds a bandwidth supported by a first-type terminal, the first information indicates that the first-type terminal is capable or incapable of using the predetermined resource configuration information to perform the data transmission of the 2-step random access, and the bandwidth supported by the first-type terminal is less than a bandwidth threshold.

16. A device for determining a resource for a random access, comprising:
a transmission module, configured to transmit first information to a first-type terminal;
wherein the first information indicates that the first-type terminal is capable or incapable of using predetermined resource configuration information to perform data transmission of a 2-step random access, a bandwidth indicated by the predetermined resource configuration information exceeds a bandwidth supported by the first-type terminal, and the bandwidth supported by the first-type terminal is less than a bandwidth threshold.

17. A communication device, comprising:
an antenna;
a memory; and
a processor, connected to the antenna and the memory, and configured to control transmission and reception of the antenna and perform the method according to any one of claims 1 to 12 or claims 13 to 14 by executing computer executable instructions stored in the memory.

18. A computer storage medium, having computer executable instructions stored thereon, wherein when the computer executable instructions are executed by a processor, the method according to any one of claims 1 to 12 or claims 13 to 14 is performed.
